Europäisches Patentamt

European Patent Office

Office européen des brevets

(11) Publication number: **0 128 982**
A1

## EUROPEAN PATENT APPLICATION

(21) Application number: **83303516.5**

(22) Date of filing: **17.06.83**

(51) Int. Cl.³: **F 16 N 15/00**
F 16 N 17/04, C 10 M 7/20

(43) Date of publication of application:
**27.12.84** Bulletin **84/52**

(84) Designated Contracting States:
AT BE CH DE FR GB IT LI LU NL SE

(71) Applicant: **Bestobell (UK) Limited**
16 Bath Road
Slough, Berks. SL1 3SS(GB)

(72) Inventor: **Webb, John Wanless McNaughton**
11 Middle Drive
Rotherham South Yorkshire S60 3DL(GB)

(72) Inventor: **Wilson, William Harvey The Industrial Unit of
Tribology The University Woodhouse Lane**
Leeds LS2 9TJ(GB)

(74) Representative: **Skone James, Robert Edmund et al,
GILL JENNINGS & EVERY 53-64 Chancery Lane**
London WC2A 1HN(GB)

(54) Lubricating metal surfaces.

(57) A method of lubricating a metal surface is described, the method comprising causing fatty acid to react with the surface to create a low shear strength wear resistant surface.

EP 0 128 982 A1

0128982

BESTOBELL (U.K.)
LIMITED      - 1 -      52/2098/01

## LUBRICATING METAL SURFACES

The invention relates to a method of lubricating a metal surface.

Most lubricants have been developed for use at moderate temperature and in non-reactive environments but there is an increasing requirement for methods of lubricating metal surfaces which may be exposed to potentially hazardous environments. For example, flow of certain gaseous and liquid materials at ambient and low temperature must be controlled by valves, the moving parts of which require lubrication to reduce friction and wear. Conventional lubricants are not acceptable because of the risk of fires and explosions. Lubricants based upon hydrocarbons are unsuitable for gaseous and liquid oxygen systems while lubricants suitable for gaseous and liquid nitrogen systems are very expensive and require renewal at regular intervals. Because of these problems it has been normal practice to select the materials for the spindle and valve housing so that these can operate without lubrication and with the minimum of galling. This has resulted in a short working life with excessive torque being required to effect closure of the valve.

In accordance with one aspect of the present invention, a method of lubricating a metal surface comprises causing fatty acid to react with the surface to create a low shear strength wear resistant surface.

0128982

With this method, the fatty acid reacts with the metal and a modified surface layer is formed in the reaction so that the lubricant is effectively incorporated into the metal surface itself as a boundary layer. It has been found that where this method is applied in a valve to lubricate the spindle/valve housing contacts the torque required to operate the valve has been considerably reduced and the working life of the valve has been increased by at least 2 times and indeed it is not necessary to renew the lubricant during the working life of the valve.

The method may be carried out on other valve components which rotate or move relatively to one another such as the union nut holding the valve housing to the valve body. Tests have shown that friction in the screw thread between the union nut and the mating thread on the valve body accounts for a considerable amount of the torque required to ensure a pressure tight seal between the valve housing and the valve body. The application of the method in accordance with the invention to the male and female threads has reduced the torque required to achieve a pressure tight seal. This is particularly important when after a period of service valves in confined areas require maintenance, since the valves can be dismantled in situ more readily often without disturbing adjacent pipework. Previously, it was often necessary to remove the valve completely to dismantle it for repair.

Preferably, the method further comprises removing substantially all unreacted fatty acid from the surface.

- 3 -

This additional step is possible since the fatty acid which has reacted with the surface cannot be removed by conventional removal techniques thus allowing excess fatty acid to be removed and enabling the metal surface to be exposed to potentially hazardous environments such as liquid oxygen at low temperature.

Preferably, the fatty acid comprises saturated aliphatic carboxylic acid with a general formula $CH_3(CH_2)_x$ COOH where x is between 10 and 16, most preferably 16.

Preferably, the fatty acid is at least 95% pure although we have found that commercial grade mixtures of fatty acids containing up to 50% of lower molecular weight fatty acids may also be used.

The fatty acid may be caused to react with the metal surface by heating the metal surface and immersing the heated metal surface in molten fatty acid. This enables the fatty acid to make intimate contact with all parts of the metal surface which is particularly important in the case of a surface which comprises a screw-thread.

Where unreacted fatty acid is removed this may be achieved by conventional ultrasonic means or by using known solvents.

In accordance with a second aspect of the present invention, a method of assembling a valve comprises immersing one or both of a screw-threaded valve spindle and a screw-threaded spindle support in molten fatty acid; causing the fatty acid to react with the surface of the valve spindle and/or the spindle support; and inserting the threaded valve spindle in the spindle support This method may further comprise removing substantially all unreacted fatty acid from the surface of the valve spindle and/or spindle support prior to inserting the valve spindle

in the valve housing.

In accordance with a third aspect of the present invention, apparatus for controlling the flow of a liquid at cryogenic temperature includes a valve which has been assembled by a method in accordance with the second aspect of the present invention.

By cryogenic temperatures we mean temperatures at least down to those at which liquid oxygen and liquid nitrogen exist i.e. $-196^{\circ}C$.

Preferably the method in accordance with the first aspect of the present invention also comprises cleaning the metal surface prior to causing fatty acid to react with the surface.

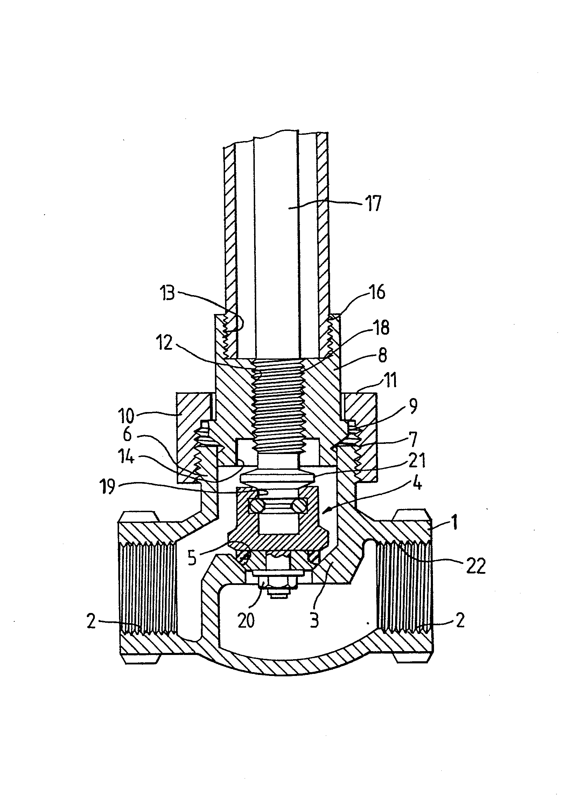

An example of a method in accordance with the invention will now be described with reference to the accompanying drawing which is a cross-section through part of a cryogenic valve.

The valve partially illustrated in the drawing is a globe valve and has a copper alloy housing 1 surrounding a fluid passageway 2. The fluid passageway 2 passes through a circular valve seat 3 with which a valve closure member 4 cooperates to close the fluid passageway 2, as shown in the drawings. The valve seat 3 has a frusto-conical shape against which an annular seal 5 abuts when the valve closure member 4 is in the closed position.

An integral spigot part 6 of the housing 1 is externally screw-threaded at 7. A spindle support 8 having an external annular rib 9 rests on the spigot part 6 and is held in position by an internally screw-threaded cap 10 which is screwed onto the spigot 6 and which has a flange 11 abutting against the part of the rib 9 remote from the spigot 6.

The spindle support 8 has an internally screw-threaded bore 12 and counterbores 13, 14 formed at its upper and lower ends respectively (as seen in the drawing). The counterbore 13 is internally screw-threaded and receives a stainless steel extension tube 15 which is externally screw-threaded at 16.

A stainless steel valve actuating spindle 17 having a widened, externally screw-threaded part 18 extends through the extension tube 15, through the bore 12 in which it is screwed, and into the fluid passageway 2. The valve closure member 4 is mounted on the spindle 17 which extends through a bore 19 in the closure member 4 and terminates in an externally screw-threaded portion on which is mounted a nut 20. The closure member 4 is held in place by tightening the nut 20 to urge the closure member 4 against an integral annular rib 21 on the spindle 17.

A conventional handle (not shown) is mounted non-rotatably on the spindle 17.

When it is desired to open the valve, the spindle 17 is rotated by rotating the handle so that due to the engagement of the externally screw-threaded part 18 and the internally screw-threaded bore 12, the closure member 4 is moved away from the valve seat 3. The counterbore 14 is of a size to receive the annular rib 21.

In one example in order to lubricate the connection between the spindle 17 and the bore 12 of the support 8, the bore 12 is cleaned in a conventional manner and the support 8 is then heated to between 90 and 100°C. The heated support 8 is then immersed in molten stearic acid for between 20 and 30 minutes.

This causes stearic acid to react with the exposed copper surfaces to form copper stearate. In fact, not only will the bore 12 be lubricated in this way but also the external screw-thread 7. Excess, unreacted fatty acid is then removed and the support 8 is assembled with the spigot part 6 of the housing 1 by means of the cap 10.

In view of the lubrication which has occurred, it is comparatively easy to screw the cap 10 onto the screw-thread 7 of the spigot part 6 and a firm pressure tight seal can be obtained. The spindle 17 is screwed into the bore 12 prior to assembly of the support 8 with the housing 1.

The valve is then connected in a pipeline (not shown) adjacent ends of the pipeline being screwed into screw-threaded portions 22 of the housing 1.

It has been found that lubricating the bore 12 increases the working life of the valve by up to five times as compared with the conventional non-lubricated valve.

CLAIMS

1. A method of lubricating a metal surface characterised by causing fatty acid to react with the surface
to create a low shear strength wear resistant surface.

2. A method according to claim 1, further comprising
removing substantially all unreacted fatty acid from
the surface.

3. A method according to claim 1 or claim 2,
further comprising cleaning the metal surface prior
to causing the fatty acid to react with the surface.

4. A method according to any of the preceding
claims, wherein the fatty acid is caused to react
with the metal surface by heating the metal surface
and immersing the heated metal surface in molten
fatty acid.

5. A method according to any of the preceding claims,
wherein the fatty acid comprises saturated aliphatic
carboxylic acid with a general formula $CH_3(CH_2)_xCOOH$
where x is between 10 and 16.

6. A method according to claim 5, wherein x is 16.

7. A method according to any of the preceding claims
wherein the fatty acid is at least 95% pure.

8. A method according to any of the preceding claims
wherein the metal surface is defined by part of a valve.

9. A method of assembling a valve characterised by
immersing one or both of a screw-threaded valve spindle
(17) and a screw-threaded valve spindle support (8) in
molten fatty acid; causing the fatty acid to react
with the surface of the valve spindle and/or spindle support; and inserting the threaded valve spindle (17) in the spindle support (8).

10. Apparatus for controlling the flow of a liquid at cryogenic temperature, the apparatus including a valve which has been assembled by a method in accordance with claim 9.

# EUROPEAN SEARCH REPORT

**European Patent Office**

**0128982**
Application number

EP 83 30 3516

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-1 672 922 (WISNER)<br>* Page 1, lines 51-72 *<br><br>--- | 1,4-6 | F 16 N 15/00<br>F 16 N 17/04<br>C 01 M 7/20 |
| X | DE-C- 823 552 (COMPAGNIE FRANCAISE DE RAFFINAGE)<br>* Page 2, lines 14-21 *<br><br>--- | 1,2,5,6 | |
| X | US-A-2 897 778 (HELD)<br><br>* Column 2, lines 1-20, 56-61 *<br><br>--- | 1,3,5,6 | |
| A | US-A-2 254 341 (ZAIKOWSKY)<br>* Page 1, right-hand column, lines 12-39 *<br><br>--- | 8 | |
| A | GB-A- 657 532 (COMPAGNIE FRANCAISE DE RAFFINAGE)<br><br>----- | | TECHNICAL FIELDS SEARCHED (Int. Cl. 3)<br><br>F 16 N<br>C 01 M |

The present search report has been drawn up for all claims

| Place of search | Date of completion of the search | Examiner |
|---|---|---|
| THE HAGUE | 30-01-1984 | KOOIJMAN F.G.M. |